# EUROPEAN PATENT APPLICATION

(11) **EP 2 389 818 A2**
(43) Date of publication of application: **30.11.2011**
(21) Application number: 11167821.5
(22) Date of filing: 27.05.2011
(51) Int. Cl.: A23L 1/01

(54) **A method of cooking a frozen food product and means for carring out the method**

(30) Priority: 28.05.2010 GB 1009009
(71) Applicant: Birds Eye IPCO Limited, Feltham, Middlesex TW14 8HA (GB)
(72) Inventor: Gaile, Ralf, Feltham Middlesex TW14 8HA (GB); Metten-Helbich, Dieter, Feltham Middlesex TW14 8HA (GB)
(74) Representative: Rees, Alexander Ellison

(57) **Abstract**

There is provided by the present invention a method of packaging frozen food products, comprising: placing at least one frozen food product in a support structure arranged to retain the frozen food product at a fixed position within the support structure, the support structure having external surfaces arranged to allow the support structure to be placed in a toasting slot of a toaster.

Also provided is method of cooking frozen food products, comprising carrying out the method of packaging; placing the support structure and frozen food product (2) in the toasting slot of a toaster (5); and heating the food product for a predetermined time using the toaster.

Also provided is a food product support, comprising: retaining means adapted to retain at least one frozen food product at a fixed position within the support; and external surfaces arranged to allow the support structure to be placed in a toasting slot of a toaster.

Also provided is a food product package, comprising the food product support and at least one frozen food product.

## Description

The present invention relates to a method for cooking a frozen food product, especially a frozen fish product, and packaging adapted to be carry out the method.

It is known to prepare fish products in frozen form shaped into a geometrically regular shape, e.g. a cuboid block. One common example of such a frozen fish product is a fish finger. Typically, such products are fast frozen and packed in cardboard boxes, although other types of packaging are also known.

A disadvantage of these products is that cooking the product generally requires an oven, grill or frying pan, which can be inconvenient. Further, cooking the products can have a relatively large energy cost, and generate a relatively large amount of mess, compared to the amount of the product cooked, particularly if only a small number of products are cooked, such as a single serving.

It is known to produce microwaveable fish fingers which can be cooked in a microwave oven. However, in practice, microwaveable fish fingers have the disadvantages that they lack the crispy consistency when cooked that is generally desired by consumers, and that such microwaveable fish fingers have been found relatively expensive to produce.

According to the present invention, in a first aspect there is provided a method of packaging frozen food products, comprising: placing at least one frozen food product in a support structure arranged to retain the frozen food product at a fixed position within the support structure, the support structure having external surfaces arranged to allow the support structure to placed in a toasting slot of a toaster.

Preferably, the method further comprises placing the frozen food product and support structure in a box.

According to the present invention, in a second aspect there is provided a method of cooking frozen food products, comprising the steps of: placing at least one frozen food product in a support structure arranged to retain the frozen food product at a fixed position within the support structure, the support structure having external surfaces arranged to allow the support structure to be placed in a toasting slot of a toaster; placing the support structure and frozen food product in the toasting slot of a toaster; and heating the food product for a predetermined time using the toaster

According to the present invention, in a third aspect there is provided a food product support, comprising: retaining means adapted to retain at least one frozen food product at a fixed position within the support; and external surfaces arranged to allow the support structure to be placed in a toasting slot of a toaster.

According to the present invention, in a fourth aspect there is provided a food product package, comprising: a food product support and at least one frozen food product; the food product support comprising: retaining means adapted to retain the frozen food product at a fixed position within the support; and external surfaces arranged to allow the support structure to be placed in a toasting slot of a toaster.

Preferably the package further comprises a box containing the food product support and the frozen food product.

The present invention provides the advantage that it allows frozen food products to conveniently be cooked in a toaster with little or no mess. Further, the cooking has a relatively low energy cost relative to the amount of the product cooked, even for a single serving. Further, the cooked frozen food products can be cooked to provide a crispy consistency.

Preferred embodiments of the present invention will now be described, by way of example only, with reference to the accompanying drawings, in which:
Figure 1 is a front view of a frozen food package according to the present invention;
Figure 2 is a front view of a support frame of the frozen food package of Figure 1;
Figure 3 is an end view of the frozen food package of Figure 1;
Figure 4 is a perspective top view of a part of the frozen food package of Figure 1;
Figure 5 is front view of an alternative frozen food package according to the present invention;
Figure 6 is a front view of a support frame of the frozen food package of Figure 5; and
Figure 7 is a blank usable to produce the support frame of Figure 5.

In the following, the invention will be described, by way of example only, as applied to cooking a frozen fish finger. However, as noted above, the invention finds application with other food products having a suitable size and shape and suitable cooking properties.

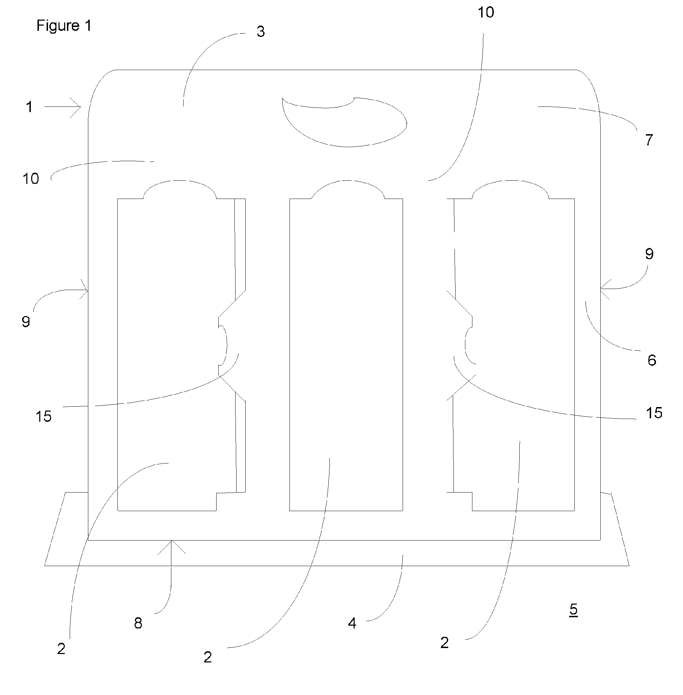

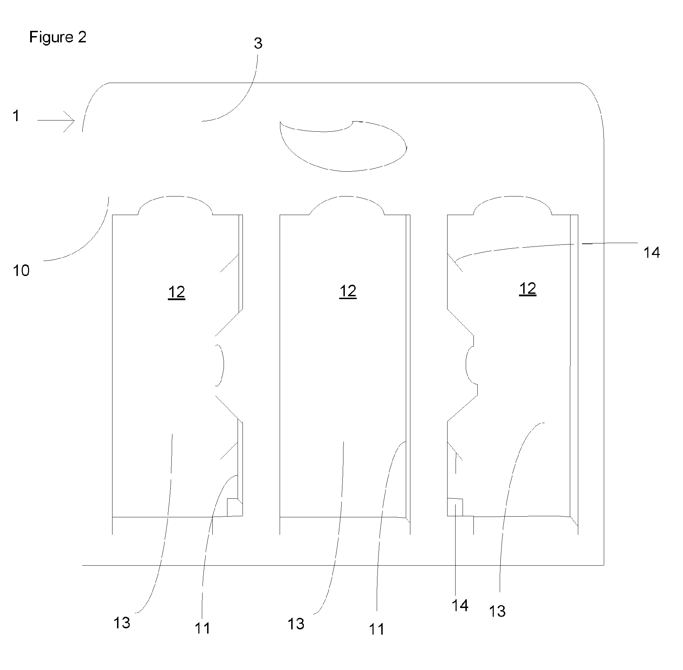

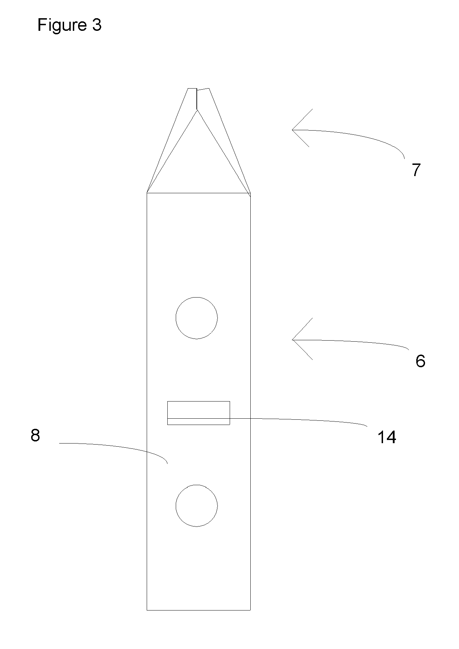

Figures 1, 3 and 4 show different views of a first embodiment of a frozen food package 1 according to the invention. The frozen food package 1 comprises three frozen fish fingers 2 mounted in a support frame 3. In Figure 2 the support frame 3 is shown in isolation without the fish fingers 2.

As an overview of the invention, the fish fingers 2 can be cooked by placing the entire frozen food package 1, comprising the fish fingers 2 and the support frame 3, into a toasting slot of a toaster.

In Figures 1 and 2 the frozen food package 1 is shown oriented to allow the frozen food package 1 be inserted vertically downwardly into a horizontal opening 4 of a vertical toasting slot of a toaster 5 (not shown in full), and all directional references such as top, bottom and the like are based upon this illustrated orientation. The frozen food package 1 can be placed in any other orientation and the frozen food package 1 is able to retain the fish fingers 2 when in any orientation in order to simplify storage and handling of the frozen food package 1, and to allow maximum flexibility in cooking the fish fingers 2. However, it will be understood that in practice the most common arrangement for a toaster is to have a vertical toasting slot with an opening allowing access at the upper end of the toasting slot.

In the illustrated example the support frame 3 is formed by a body section 6 containing the fish fingers 3 and a handle section 7 extending upwardly from the top of the body section 6.

The body section 6 is substantially cuboid in shape. The body section 6 comprises first and second spaced apart parallel rectangular end walls 8 forming vertical end faces of the body section 6 and a bottom rectangular wall 9 forming a bottom face of the body section 6. The body section 6 further comprises first and second spaced apart parallel side walls 10 forming side faces of the body section. The top of the body section 6 is open. The end walls 8 interconnect the side walls 10 and are each connected at their respective bottom edge to the bottom face 9. Thus, the body section 6 defines a substantially cuboid box structure having an open top.

The side walls 10 and the end walls 8 extend upwardly from the body section 6 to form the handle section 7.

The body section 6 further comprises first and second spaced apart parallel vertical intermediate walls 11. The intermediate walls 11 are each connected between the side walls 10 and are connected at their respective bottom edges to the bottom wall 9.

The intermediate walls 11 are parallel to the two end walls 8 and are located between the two end walls 8, so that the two end walls 8 and the two intermediate walls 11 define three fish finger holding regions 12 between them. The intermediate walls 11 stop at the top of the body section 6. The intermediate walls 11 do not extend into the handle section 7 of the support frame 3.

Each of the side walls 10 has three openings 13 at positions corresponding to the three fish finger holding regions 12.

In the illustrated embodiment the central one of the three fish finger holding openings 13 is slightly narrower than the other two fish finger holding regions. This is not essential. In other embodiments the three fish finger holding openings 13 may all be of equal width. Further, in other embodiments the separations between each end wall 8 and the respective adjacent intermediate wall 11, and the separation between the two intermediate walls 11, are all equal.

Each of the three openings 13 defines a space slightly smaller in each dimension than a fish finger 2 which is to be held and cooked in the support frame 3. The width of each opening 13 is slightly smaller than the width of a fish finger 2. The width of each of the three fish finger holding regions 12, which are defined between adjacent ones of the end walls 8 and intermediate walls 11, is slightly larger than the width of a fish finger 2. The length of each opening 13 is slightly larger than the width of a fish finger 2. The depth of each fish finger holding regions 12, which is defined by the separation between the side walls 10, or in other words the thickness of the support frame 3, is slightly larger than the thickness of a fish finger 2.

It is preferred that the width and length of each opening 13 be slightly less than the width and length of a fish finger 2 so that the fish finger cannot pass through the opening. Accordingly, the fish fingers 2 are retained within the support frame 3 during toasting.

Preferably the, or each, opening 10 is sized and shaped so that most of the surface of fish finger 2 facing the opening 10 is directly exposed. This allows even and quick cooking of the fish fingers 2 by radiant energy during toasting.

Preferably the, or each, opening 10 is sized so that more than 50% of the surface of the fish finger facing the opening 10 is exposed through the opening 10.

More preferably the, or each, opening 10 is sized so that more than 75% of the surface of the fish finger facing the opening 10 is exposed through the opening 10.

More preferably the, or each, opening 10 is sized so that more than 90% of the surface of the fish finger facing the opening 10 is exposed through the opening 10.

The openings 13 may have edges of any convenient shape. The edges of the openings 13 may, for example, be defined in part by inwardly projecting flaps 15.

It is preferred that the dimensions of each holding region 12 be slightly larger than a fish finger 2 in order to allow fish fingers 2 to be easily and reliably inserted into the support frame 3 during packing and assembly of the frozen food package 1, and to allow cooked fish fingers 2 to be easily removed from the support frame 3 after cooking. As explained above the body section 6 of the support frame 3 has an open top. Accordingly, the fish fingers 2 may be inserted into, or removed from, the support frame 3 through this open top and between the end walls 8 and side walls 10 forming the handle section 7.

It is preferred that the depth of each holding region 12, that is the thickness of the support frame 3, be slightly larger than the thickness of a fish finger 2 in order to prevent contact between the fish fingers 2 and the toaster 5 during cooking, and also to protect the fish fingers 2 during storage and handling of the frozen food product 1.

In order to retain and locate the fish fingers 2 within the holding regions 12 each of the end walls 8 and intermediate walls 11 has one or more respective flaps 14 which are biased to project slightly outwardly from the walls into the adjacent holding region 12 to contact any fish finger 2 in the adjacent holding region 12. Each flap 14 is biased inwardly into a respective holding region 12 so that when a holding region 12 is empty, before a fish finger 2 is placed in the holding region 12, the ends of the flaps 14 projecting into the holding region 12 from opposite sides are separated by a distance slightly less than the width of a fish finger 2. Accordingly, each of the fish fingers 2 is retained in a respective holding region 12 by an interference fit between the fish finger 2 and the flaps 14. Thus, each of the three fish fingers 2 of the frozen food package 1 is located and retained in a respective one of each of the holding regions 12.

Thus, the fish fingers 2 are held in predetermined positions and orientations relative to the support frame 3, and thus also with respect to the toaster 5.

The use of flaps 14 is not essential. In some embodiments one, some, or all of the holding regions 12 may have no flaps 14. Further, in some embodiments one, some or all of the holding regions 12 may have flaps 14 on only one side.

Although the illustrated embodiment has two intermediate walls 11 in order to define three holding regions 12 retaining three fish fingers 2, this is not essential. The number of intermediate walls 11 may be varied as required by the number of fish fingers 2 which are to be held and cooked in the support frame 3. In practice, the sizes of standard fish fingers and the toasting slots of toasters in general use are such that the use of three holding regions 12 to hold three fish fingers 2 is expected to be generally preferred. However, if the support frame 3 was intended to be used with different food products a different number may be preferred.

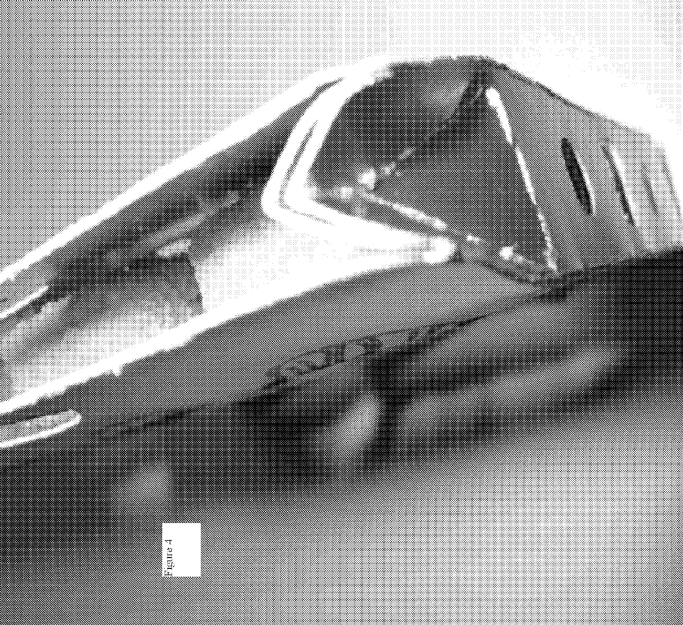

The handle section 7 extends upwardly from the top of the support frame 3. As can be seen most clearly in Figure 4, the handle section 7 is formed by inwardly folding the end walls 8 between the side walls 10. This inward folding of the side walls 8 urges the side walls 10 inwards towards one another so that the handle section 7 tapers upwardly away from the body section 6. This inward taper prevents the fish fingers 2 from falling out of the support frame 3 and also provides a convenient shape for grasping the support frame. Further, this inward taper assists in ensuring safe ejection from a toaster.

As is shown in Figure 4 the handle section 7 has curved corners. These curved corners further assist in ensuring safe ejection from a toaster.

The frozen food product 1 can be handled, placed in the toasting slot of a toaster, and removed from the toasting slot of a toaster after cooking by grasping the handle section 7. This allows the fish fingers 2 to be cooked and served without requiring the use of any utensils and without direct manual contact with the fish fingers 2.

In the illustrated embodiment the support frame 3 is formed from a single sheet of aluminium foil coated cardboard material by folding from a patterned blank.

Folding a cardboard blank is a manufacturing technique well known in the art which is suitable to produce large numbers of support frames 3 consistently and at low cost. This is particularly advantageous when the fish fingers 2 are to be automatically placed in the support frame 3.

In alternative embodiments the support frame 3 could be formed from a metal sheet, such as an aluminium sheet or a stainless steel sheet. These alternative embodiments could also be formed by folding from a sheet blank.

A further advantage of forming the support frame 3 from a folded sheet blank is that it is convenient to form the biased flaps 14 to retain the fish fingers 2 in the support frame 3 by folding suitably shaped parts of the blank.

It is preferred to form the support frame 3 from aluminium foil coated cardboard because this material is cheap, easy to shape and fold, and has suitable physical properties and temperature resistance. Further, aluminium foil coated cardboard is readily disposed of and/or recycled by generally available domestic waste disposal arrangements. However, other sheet materials and/or coatings having suitable properties could alternatively be used. Further, alternative manufacturing techniques could be used instead of folding the support frame 3 from a sheet material.

The support frame 3 is formed with a double layer of the cardboard sheet forming each of the intermediate walls 11. This construction provides increased rigidity to the support frame 3. Further, this construction allows flaps 14 extending in opposite directions into different holding sections 12 from each of the intermediate walls 11 to be conveniently formed from different layers of the cardboard sheet.

In order to cook the fish fingers 2 the support frame 3 holding the frozen fish fingers 1 can, for example, be placed in the toasting slot 4 of a conventional pop-up toaster 5 (not shown in full).

Toasters of this general type are very well known in the art so that their operation and characteristics do not need to be explained in detail in the present application. As is well known in the art, domestic toasters, often referred to as pop-up toasters, generally comprise a vertical slot with a rectangular cross-section and heating elements located on either side of the slot. Material to be toasted, typically bakery food products, can be placed in the slot to be toasted by being held between the heating elements. Toasters generally comprise means intended to retain the material to be toasted in the middle of the slot in order to prevent the material from contacting the heating elements and burning and to ensure acceptably uniform toasting of both sides of the material, and also generally comprise means to at least partially eject material from the slot when toasting has been completed.

As explained above, the support frame 3 holds the fish fingers 2 in predetermined positions and orientations relative to the external surfaces of the support frame 3. As a result, during the cooking process the external surfaces of the support frame 3 engage with the toaster 5 to keep the support frame 3 and the supported fish fingers 2 stably located relative to the heating elements of the toaster 5.

The precise nature of the engagement, and which parts of the external surfaces of the support frame 3 are engaged, will depend upon the precise details of the toaster 5, and will be different for different designs of toaster 5.

In the illustrated embodiment of figures 1 to 4 the support frame 3 has external dimensions of 109mm long, 105mm high and 19mm thick and holds three fish fingers 2 in the usual size range of 25g to 30g each. Other dimensions can of course be used. The dimensions of the support frame 3 are determined by the size of the fish fingers 2, and by the size of the toasting slots of toasters which the frozen food package 1 is intended to be inserted into for cooking. In practice most toasters are designed to accommodate a range of sizes of products in order to allow an acceptably broad range of bakery food products to be toasted.

In a preferred embodiment the frozen food package 1 is supplied frozen and enclosed in a cardboard box. One or more frozen food packages 1 may be enclosed in each box.

Preferably, where multiple frozen food packages are packed together, for example enclosed in a common box, the handle section 7 of each frozen food package 1 can be arranged to extend alongside the handle section 7 of another frozen food package 1. This minimises the amount of space occupied by the frozen food product when it is packaged.

In order to cook the fish fingers 2 the frozen food package 1 is simply taken out of the box by grasping the handle section 7, inserted into the toasting slot of a toaster 5, and cooked at a predetermined heating intensity for a predetermined time. At the end of the predetermined time the food package 1 will generally be at least partially ejected from the toaster 5, and is removed from the toaster 5 by grasping the handle section 7. The cooked fish fingers 2 are then removed from the support frame 3. It is expected that the cooked fish fingers 2 will be removed from the support frame 3 by simply pulling apart the side walls 12 of the handle section and inverting the support frame 3 so that the cooked fish fingers 2 drop out, or can be pushed out. However, the support frame 3 may be arranged to be unfoldable to allow the cooked fish fingers to be released, if necessary.

In practice, one example of the predetermined heating intensity for a predetermined time which is suitable to cook the fish fingers 2 is to apply the highest level of toasting selectable on the toaster for two full cycles. Generally this will correspond to approximately 8 minutes of cooking time. For most toasters the heating intensity is fixed and the selected level of toasting is applied by changing the heating time. This is only one possible example, and a user can of course vary the predetermined heating intensity and predetermined time applied to suit the properties of the toaster used and their cooking preferences.

Although the intensity of heating, location of the heating elements, and the range of selectable toasting times will of course vary between different designs of toaster, all toasters are designed to provide a similar degree of toasting to a similar range of bakery food products. As a result, the degree of variation between the highest level of toasting selectable on different toasters is usually small enough that the results of cooking the fish fingers in this way will be acceptable.

The support frame 3 enables the necessary handling of the frozen food package 1 to be carried out without it being necessary to touch the fish fingers 2 until the cooking process has been completed, improving hygiene and minimising the need to use cooking utensils.

Forming the support frame 3 from foil coated cardboard provides the advantage that water and oil released from the fish fingers 2 during cooking can be absorbed by the cardboard of the support frame 3. This helps to ensure proper cooking of the fish fingers 2 to a generally preferred crispness, and minimises the risk of soiling of the toaster 5.

It is preferred not to have any wrapping around the frozen food package 1 in order to minimise cost and wastage, simplify cooking, and to avoid any possibility that the frozen food package could be mistakenly inserted into a toaster with such a wrapping still in place. However, if desired it would be possible to have a wrapping, for example, paper or a plastics or metal foil, around the frozen food package 1.

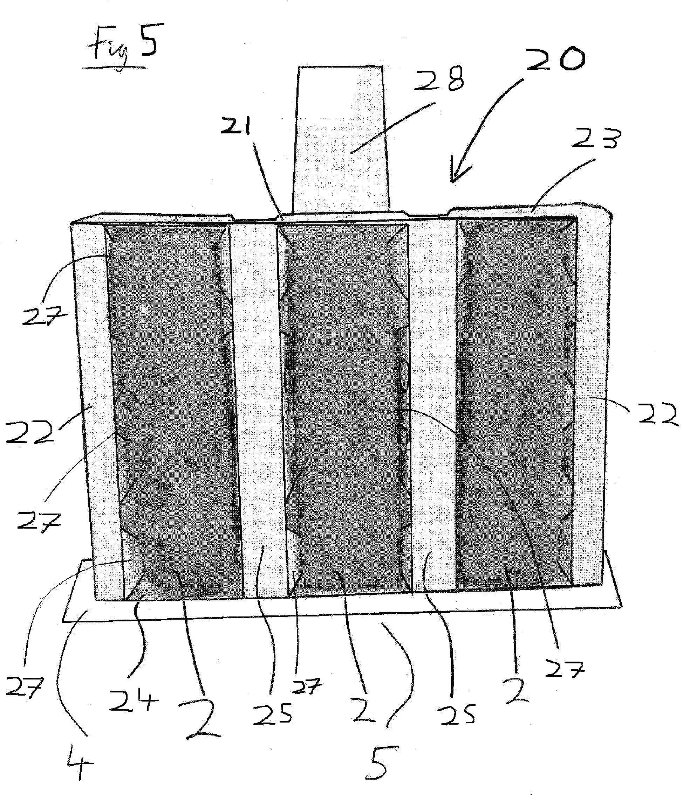

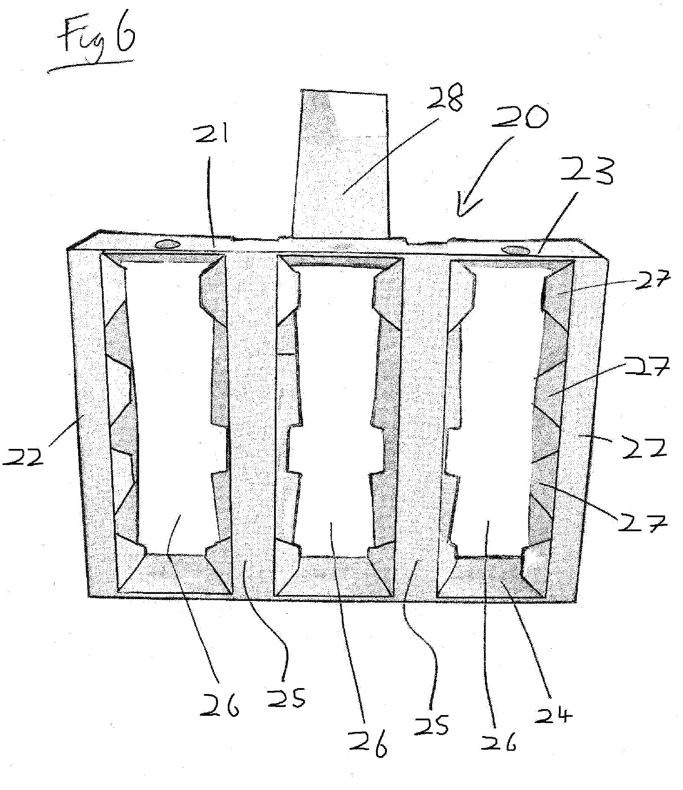

Figure 5 shows a second embodiment of a frozen food package 20 according to the invention. The frozen food package 20 comprises three frozen fish fingers 2 mounted in a support frame 21. In Figure 6 the support frame 21 is shown in isolation without the fish fingers 2. The general purpose and use of the second embodiment of cooking fish fingers in a toaster is the same as the first embodiment.

In this second embodiment the support frame 21 is substantially cuboid in shape. The support frame 21 comprises first and second spaced apart parallel rectangular end walls 22 forming vertical end faces of the support frame 21 and top and bottom spaced apart parallel rectangular faces 23 and 24 forming top and bottom faces of the support frame 21. The end walls 22 are each connected at their respective top and bottom edges to the top face 23 and the bottom face 24. There are no walls on the sides of the support frame 21. Thus, the support frame 21 defines a cuboid box structure having substantially open sides.

The support frame 21 further comprises first and second spaced apart parallel vertical intermediate walls 25. The intermediate walls 25 are each connected at their respective top and bottom edges to the top face 23 and the bottom face 24.

The intermediate walls 25 are parallel to the two end walls 22 and are located equally spaced between the two end walls 22, so that the two end walls 22 and the two intermediate walls 25 define three fish finger holding regions 26 between them. The three fish finger holding regions 26 are all of equal width and the separations between each end wall 622 and the respective adjacent intermediate wall 25, and the separation between the two intermediate walls 25, are all equal.

Each of the three regions 26 defines a space slightly larger in each dimension than a fish finger 2 which is to be held and cooked in the support frame 21. The width of each region 26, which is defined between adjacent ones of the end walls 22 and intermediate walls 925, is slightly larger than the width of a fish finger 2. The length of each region 26, which is defined between top face 723 and the bottom face 24, is slightly larger than the width of a fish finger 2. The depth of each region 26, which is defined by the thickness of the support frame 21, is slightly larger than the thickness of a fish finger 2.

In this embodiment it is preferred that the width and length of each region 26 be slightly less than the width and length of a fish finger 2 in order to allow fish fingers 2 to be easily and reliably inserted into the regions 26 during packing and assembly of the frozen food package 20, and to allow cooked fish fingers 2 to be easily removed from the support frame 21 after cooking.

It is preferred that the depth of each region 26, that is the thickness of the support frame 21, be slightly larger than the thickness of a fish finger 2 in order to prevent contact between the fish fingers 2 and the toaster 5 during cooking, and also to protect the fish fingers 2 during storage and handling of the frozen food product 1.

In order to retain the fish fingers 2 within the regions 26 each of the end walls 22 and intermediate walls 25 has a plurality of respective flaps 27 which are biased to project slightly outwardly into the adjacent region 26 and contact any fish finger 2 in the adjacent region 26. Each flap 27 is biased inwardly into a respective opening 10 so that when a region 26 is empty, before a fish finger 2 is placed in the region 26, the ends of the flaps 27 projecting into the region 26 from opposite sides are separated by a distance slightly less than the width of a fish finger 2. Accordingly, each of the fish fingers 2 is retained in a respective region 26 by an interference fit between the fish finger 2 and the flaps 27. Thus, each of the three fish fingers 2 of the frozen food package 1 is located and retained in a respective one of each of the regions 26.

Thus, the fish fingers 2 are held in predetermined positions and orientations relative to the support frame 3, and thus also with respect to the toaster 5.

Although the illustrated second embodiment has two intermediate walls 25 in order to define three regions 26 retaining three fish fingers 2, this is not essential. The number of intermediate walls 25 may be varied as required by the number of fish fingers 2 which are to be held and cooked in the support frame 21. In practice, the sizes of standard fish fingers and the toasting slots of toasters in general use are such that the use of three openings 10 to hold three fish fingers 2 is expected to be generally preferred. However, if the support frame 21 was intended to be used with different food products a different number may be preferred.

A handle 28 is provided projecting outwardly and upwardly from the top face 23 of the support frame 21. This allows the frozen food product 20 to be handled, placed in the toasting slot of a toaster, and removed from the toasting slot of a toaster after cooking by grasping the handle 28. This allows the fish fingers 2 to be cooked and served without requiring the use of any utensils and without direct manual contact with the fish fingers 2.

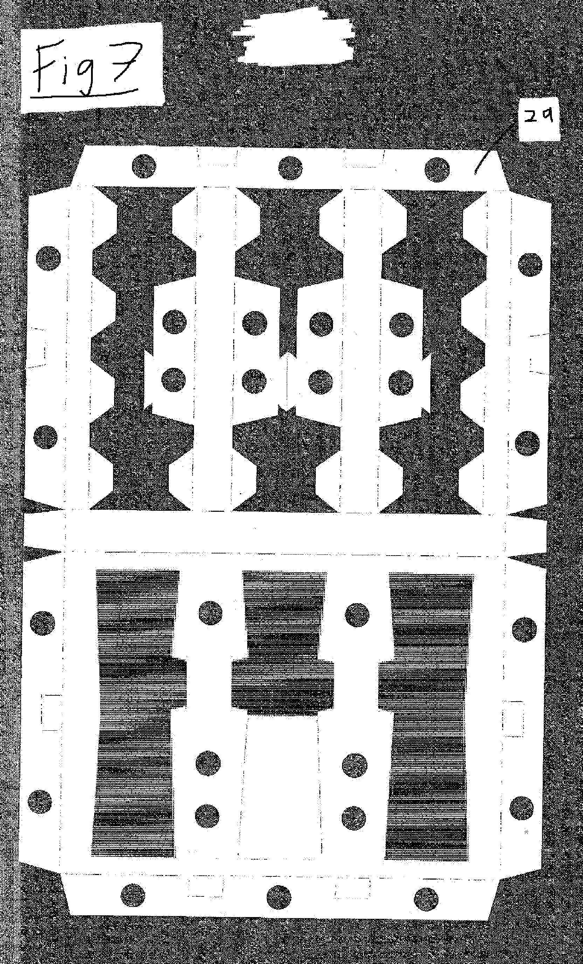

In the second embodiment the support frame 3 is formed from a single sheet of aluminium foil coated cardboard material by folding from a patterned blank. An example of a suitable blank 29 is shown in figure 7.

An advantage of forming the support frame 3 from a folded sheet blank is that the handle 28 can be easily formed from a suitably shaped part of the blank.

In the second embodiment the support frame 21 is formed with a double layer of the cardboard sheet forming each of the end walls 22 and each of the intermediate walls 25. This construction provides increased rigidity to the support frame 21. Further, this construction allows the flaps 27 extending in opposite directions into different regions 26 from each of the intermediate walls 25 to be conveniently formed from different layers of the cardboard sheet.

In the illustrated second embodiment the support frame 21 has external dimensions of 125mm long, 91mm high and 10.5 mm thick and holds three fish fingers 2 in the usual size range of 25g to 30g each.

Similarly to the first embodiment the frozen food package 20 of the second embodiment is supplied frozen and enclosed in a cardboard box. One or more frozen food packages 20 may be enclosed in each box.

Preferably, in the second embodiment the handle 28 is folded flat against the top or side of the support frame 21 when the frozen food package 20 is packaged, and is folded out, or otherwise extended, by the user when it is intended to cook the fish fingers 2. This minimises the amount of space occupied by the frozen food product when it is packaged. Alternatively, where multiple frozen food packages 20 are packed together, for example enclosed in a common box, the handle 28 of each frozen food package 20 can be arranged to extend alongside another frozen food package 20.

In some embodiments the support frame may be disposable and used only once. However, in other embodiments it may be possible for the support frame to be useable more than once and for the user to insert fish fingers 2 into the support frame on each occasion that it is used.

In one embodiment the support frame may be used twice and then disposed of. If the support frame is used many times there can be a problem of the cooking generating an unpleasant smell because of the heating and gradual thermal degradation of oils and other debris deposited on, or absorbed into, the support during previous cooking.

Whilst the present invention finds particularly advantageous application with frozen fish fingers, or other frozen fish food products, it can also be applied to other food products such as, for example, other frozen meat products including poultry, beef, pork and lamb and/or non-frozen food products, as will be appreciated by the person skilled in the art.

The above description relates to exemplary embodiments of the invention. It will be understood that features described in relation to one embodiment may also be used in another embodiment. The skilled person will be able to envisage alternatives within the scope of the present invention as set out in the appended claims.

## Claims

1. A method of packaging frozen food products, comprising:
placing at least one frozen food product in a support structure arranged to retain the frozen food product at a fixed position within the support structure, the support structure having external surfaces arranged to allow the support structure to be placed in a toasting slot of a toaster.

2. The method of claim 1, wherein the support structure has two opposed parallel sides and the frozen food product is retained adjacent openings in each of the two opposed parallel sides of the support structure.

3. A method of cooking frozen food products, comprising the steps of:
placing at least one frozen food product in a support structure arranged to retain the frozen food product at a fixed position within the support structure, the support structure having external surfaces arranged to allow the support structure to be placed in a toasting slot of a toaster;
placing the support structure and frozen food product in the toasting slot of a toaster; and
heating the food product for a predetermined time using the toaster.

4. The method of claim 3, wherein the support structure has two opposed parallel sides and the frozen food product is retained adjacent openings in each of the two opposed parallel sides of the support structure arranged so that when the support structure and frozen food product are placed in the toasting slot of a toaster the frozen food product is substantially fully exposed to heating elements of the toaster through the openings.

5. The method of any preceding claim, wherein the openings are smaller than the frozen food product so that the frozen food product cannot pass through the opening.

6. The method of claim 5 wherein the opening is sized so that more than 50% of the frozen food product is exposed through the opening.

7. The method of any preceding claim, wherein the frozen food product is a frozen fish product; and
preferably wherein the frozen food product is a fish finger.

8. A food product support, comprising:
retaining means adapted to retain at least one frozen food product at a fixed position within the support; and
external surfaces arranged to allow the support structure to be placed in a toasting slot of a toaster.

9. The support according to claim 8, wherein the food product support has two opposed parallel sides and openings in each of the two opposed parallel sides of the food product support, and the retaining means are adapted to retain a frozen food product adjacent openings in each of the two opposed parallel sides.

10. The support according to claim 8 or claim 9, wherein the openings are smaller than the frozen food product so that the frozen food product cannot pass through the opening.

11. The support according to claim 10 wherein the opening is sized so that more than 50% of the frozen food product is exposed through the opening.

12. The support according to claim 9, or claims 10 or 11 when dependent from claim 9, wherein the food product support further comprises at least one intermediate wall parallel to and located between the end walls, and retaining regions are defined between the walls.

13. The support according to any one of claims 8 to 12, wherein the support is formed of cardboard sheet, or
wherein the support is formed of aluminium foil coated cardboard sheet; or
wherein the support is formed of aluminium sheet; or wherein the support is formed of stainless steel sheet.

14. The support according to claim 13, wherein the support is formed from a sheet blank by folding.

15. A food product package, comprising: a food product support according to any one of claims and at least one frozen food product; the retaining means being adapted to retain the frozen food product at a fixed position within the support.

16. The package according to claim 15, wherein the frozen food product is a frozen fish product; and
preferably wherein the frozen food product is a fish finger.
